Europäisches Patentamt

European Patent Office

Office européen des brevets

(19)

(11) Publication number: 0 255 321
A2

# (12) EUROPEAN PATENT APPLICATION

(21) Application number: 87306615.3

(51) Int. Cl.⁴ C01B 33/16

(22) Date of filing: 27.07.87

(30) Priority: 28.07.86 US 889667

(43) Date of publication of application:
03.02.88 Bulletin 88/05

(84) Designated Contracting States:
BE CH DE ES FR GB IT LI NL SE

(71) Applicant: THE DOW CHEMICAL COMPANY
2030 Dow Center Abbott Road P.O. Box 1967
Midland, MI 48640(US)

(72) Inventor: Porchia, Jose
3614 Windsor Court
Midland Michigan 48640(US)
Inventor: Reddy, Damoder
4808 Birchwood Drive
Midland Michigan 48640(US)
Inventor: Garces, Juan M.
5217 Cortland Street
Midland Michigan 48640(US)
Inventor: Timm, Edward E.
9770 Center Road
Traverse City Michigan 48640(US)

(74) Representative: Burford, Anthony Frederick et
al
W.H. Beck, Greener & Co. 7 Stone Buildings
Lincoln's Inn
London WC2A 3SZ(GB)

(54) Process of making uniform size porous silica spheres.

(57) Spheroidal silica polymer beads which exhibit a uniform distribution of particle and pore size are prepared by dispersing a reactant mixture of a polymerizable silicon oxide and a gelation agent as a plurality of droplets in a liquid medium immiscible therewith and subsequently promoting polymerization of the droplets. Preferably, the droplets are formed by vibratory excitation of a laminar jet of reactant mixture. It is also preferred that the polymerizable silicon oxide is a mixture of polymerizable silicate and colloidal silica.

## PROCESS OF MAKING UNIFORM SIZE POROUS SILICA SPHERES

The present invention relates to spheroidal silica polymer beads with uniform pore size and a process for preparing such spheroidal silica polymer beads.

A wide variety of polymers are prepared in spheroidal bead form using suspension polymerization techniques, as discussed in Polymer Processes by Trommsdoff and Schildknecht, published by Interscience Publishers in 1956. Suspension polymerization consists of dispersing a monomer as droplets in a medium in which the monomers and resulting polymer are essentially insoluble. The dispersed monomer droplets are subsequently polymerized while maintaining continuous agitation.

U.S. Patent 3,678,144 discloses the preparation of porous and non-porous silica-containing bodies which contain metal oxides inextricably bound within the silica network during preparation. The method described employs an aqueous solution having a pH between 10-14 and containing 1-12 moles $SiO_2$ per liter from silicate compositions such as alkali metal silicates, quaternary ammonium silicate, colloidal silicate and mixtures thereof. Thereafter, a metal oxide is added to that solution in a form such that it can dissolve and will not reduce the pH of the solution below 10. An organic reagent selected from the group consisting of formaldehyde, paraformaldehyde, glyoxal, methyl formate, methyl acetate, ethyl formate, ethyl acetate and mixtures thereof is admixed with the solution to cause gelation of the silica to a coherent, porous body, the metal oxide becoming part of the silica network.

The porous bodies of silica obtained in the aforementioned patent generally produce pores varying in size ober a wide range. Further, these porous bodies were not spheroidal in shape. These characteristics limited the utility of the prior art porous structures.

U.S. Patent 4,112,032 discloses a method for obtaining porous silica particulate material with uniform pore size distribution by gelling homogenous mixtures of colloidal silica and potassium silicate solutions with an organic gelling agent such as formamide. Using the method of this patent, silica bodies with narrow pore size distribution within the range from 100 to 10,000 Å (10-1000 nm) were produced. The size and shape of the silica bodies are determined by the size and shape of the container in which gelation occurs. Thus, the silica bodies prepared by the method of this patent are not small, uniformly sized spheres.

EPO Patent Application 0 067 459 discloses a method of preparing silica particles having a narrow pore size distribution. The particles are prepared by a sol-gel technique in which a silica hydrosol is prepared and subsequently gelled to obtain silica particles. Spherical particles are disclosed as being produced by the practice of the above process. However, such particles do not exhibit a uniform particle diameter and only contain pores of relatively small diameter, typically ranging up to a pore diameter of 700 Å (70 nm).

Spheroidal silica polymer beads having an improved uniformity of particle size and pore diameter have long been sought in the art. Such silica polymer beads would have utility in a wide range of applications where uniform bead size and porosity is desirable.

In one aspect, the present invention is a process for preparing porous spheroidal silica polymer beads. The process comprises dispersing a reactant mixture comprising a polymerizable silicon oxide reactant and a gelation agent in a liquid medium in which the mixture of reactants is immiscible, under conditions which do not promote polymerization or substantial coalescence of the droplets of dispersed reactant mixture. The resulting suspension of reactant mixture droplets is subjected to conditions which promote the polymerization of the reactant mixture without substantial coalescence or additional dispersion of the droplets.

In the preferred aspect of this invention in step (a) the reactant mixture is passed through a constricted orifice to form a jet of material having laminar flow characteristics and said jet is directed into a liquid medium while vibratorily exciting the jet to form a plurality of droplets of the polymerizable reactant mixture suspended in said liquid medium. By the practice of this aspect of the invention, polymer beads having a sufficient uniform particle size such that 90 volume percent of the beads possess a particle diameter from 0.9 to 1.1 times the volume average particle diameter of the beads.

In another aspect, the present invention is a porous spheroidal silica polymer bead prepared by the process of this invention. The silica bead comprises the polymerization product of a polymerizable silicon oxide reactant and a gelation agent. The silica spheres exhibit a controllable uniformity of particle and pore size over a broad range of values. The particle diameter may range from 0.01 mm to 5.0 mm and the pore size ranges from 100 Å to 5,000 Å (10-500 nm) determined by the mercury penetration method employing a Micromeritics Model 9305 mercury porosimeter. Advantageously, the pore diameter distributions exhibited are such that at least 80 percent, preferably at least 90 percent, of the pores exhibit a diameter no greater than ±20 percent from the average diameter of the pores.

By the practice of the present invention, reactive phase droplets exhibiting exceptionally uniform properties can be formed. Although the droplets are known to collide upon formation, the droplets exhibit minimum coalescence and spheroidal polymer beads of uniform particle size may be prepared. Spheroidal polymer beads having uniform pore size and particle size distribution may be prepared by the practice of the present invention due in part to good heat transfer and relatively quick polymerization of the reactant mixture.

Therefore, the present invention is useful in the preparation of uniformly sized silica polymer beads with a uniform pore size distribution. The present invention is particularly useful in the preparation of polymer beads from an alkali metal silicate and colloidal silica. The polymer beads prepared by the practice of the present invention are useful in a wide range of applications such as catalyst supports, chromatographic column packing, substrate to immobilize enzymes, thermal insulator, carrier of drugs or other chemicals for controlled release, drying agents, adsorbants, packing materials, cigarette filters and other separation and filtration applications.

The reactants useful in the preparation of porous spheroidal silica polymer beads are advantageously polymerizable silicon oxide reactants which are capable of forming a homogenous aqueous reactant mixture. The term "silicon oxide" as used herein refers to both silica containing reactants and polymerizable silicates. Such reactants are well known in the art and examples may be found in Iler, R. K., _The Cemistry of Silica_, John Wiley and Sons, 1979, which is incorporated herein by reference. Examples of suitable polymerizable silicates include alkali metal silicates, quaternary ammonium silicates and lithium polysilicate. Desirable silicates must be capable of forming a homogenous solution upon mixing or combination with the silica containing reactants. A preferred polymerizable silicate is potassium silicate. Desirable silica containing reactants include colloidal silica. Of particular interest are mixtures of potassium silicate and colloidal silica, preferably a colloidal silica which has been stabilized with an ammonium salt.

The porous spheroidal silica polymer beads of uniform pore size are preferably prepared from mixtures of the above-described silicates and colloidal silica with the organic gelation agents described hereinafter. Although porous bodies can be prepared through the reaction of either a polymerizable silicate or a colloidal silica with the gelation agent, the resulting products are generally not as desirable as those prepared with mixtures of silica and silicate. When combinations of the polymerizable silicates and silica containing reactants are used, porous spheroidal silica polymer beads of uniform sizes can be prepared with superior physical strength and other desirable physical properties.

Typically, the amount of polymerizable silicates are employed in the range from 5 percent to 95 percent by volume of the total volume of polymerizable silicate and colloidal silica. Preferably, the amount of polymerizable silicate will be in the range of 10 percent to 65 percent by volume of the total volume of polymerizable silicate and colloidal silica. The amount of colloidal silica employed ranges from 90 percent to 35 percent by volume of the total volume of the polymerizable silicate and colloidal silica. The ratio of polymerizable silicate to colloidal silica will depend on the desired pore size and total porosity of the silica beads.

The amount, ratio and identity of reactants will have an effect on the pore diameter of the silica beads. For example, where potassium silicates are reacted alone with a gelation agent, relatively large pores are formed with little or no control of the pore diameter size. Also, where colloidal silica is reacted alone with the gelation agent, relatively small diameter pores are produced with major deviations from the average pore diameter. Where a mixture of potassium silicate and colloidal silica are reacted with the gelation agent, a porous silica body is obtained in which the pore diameter may be determined by the ratio of reactant. A silica bead with an average pore diameter ranging from 100 to 5,000 Å (10-500 nm) may be prepared by varying the amount of polymerizable silicate from 5 percent by volume to 95 percent by volume of the total volume of polymerizable silicate and colloidal silica.

The silica polymer beads prepared by the above reaction mixture exhibit a relatively uniform pore diameter distribution. By uniform is meant that substantially all of the pore diameters are within ±20 percent of the average pore diameter. Such pore diameters are conveniently determined by the mercury penetration method employing a Micromeritics Model 9305 mercury porosimeter. Pore diameter distributions may be further restricted by a hydrothermal treatment of the beads as discussed in Iler, R. K., _The Chemistry of Silica_, John Wiley and Sons, 1979, pp 539-544. Such treatment generally consists of heating the porous silica beads in a furnace while passing nitrogen gas saturated with water at room temperature over the silica beads for two hours or longer. The temperature to which the beads are heated ranges from 600° to 850°C, with 850°C being preferred. Treatment by the hydrothermal treatment results in a narrowing of the pore diameter distribution as well as increasing the average pore diameter.

A gelation agent is a compound capable of uniform dispersion in the reative phase, which can induce polymerization of the reactant mixture. The polymerization generally results in a reduction of pH of the silica containing solution from 12 to 10. Suitable gelation agents include formaldehyde, paraformaldehyde, formamide, glyoxal, methyl formate, methyl acetate, ethyl formate, ethyl acetate and mixtures thereof. Preferably formamide is employed as the gelation agent. The gelation agent is generally employed in an amount sufficient to initiate polymerization and obtain the desired porosity. Such amount will vary depending on a variety of factors including the amount of reactants employed, identity of reactants, temperature of polymerization and length of digestion time. The gelation agent is generally employed in amounts ranging from 0.5 to 20 percent by volume of the total reactive mixture, preferably ranging from 3 percent by volume to 15 percent by volume of the total reactive mixture. Most preferred is between 3 percent by volume and 10 percent by volume of the total reactive mixture. As noted hereinbefore, one factor in determining the porosity (percent void volume) of the silica bead is the amount of gelation agent employed. For example, when 0.5 percent by volume of the gelation agent formamide is employed with a reactant mixture comprising potassium silicate and colloidal silica in a 1:1 ratio, a bead exhibiting a porosity of 30 percent was obtained. When the concentration of formamide is increased to 25 percent by volume, the bead exhibits a porosity of 70 percent. Other parameters such as the temperature of mixing and the length of time the polymer bead is allowed to digest in the suspending medium have an effect on the porosity of the polymer bead and are discussed hereinafter.

The continuous liquid phase in which the reactant droplets are suspended is a liquid immiscible with the reactant mixture and the polymers prepared therefrom and optionally contains a stabilizing amount of a suspending agent. The suspending medium is operably any inert liquid which is immiscible with the polymerizable reactant mixture or polymerized reactant mixture in which the liquid reactant mixture is capable of being dispersed as droplets. By the term "inert" is meant that the liquid does not hinder the polymerization of the monomer droplets nor does it promote the coalescence of additional dispersion of the droplets. By the term "immiscible" is meant that less than 10 weight percent of the reactant mixture of polymerized reactant mixture is miscible (or soluble) in the suspending liquid, i.e., the suspending medium does not solvate more than 10 weight percent of the reactant mixture or polymerized reactant mixture at the conditions of polymerization. Preferably, less than 1, more preferably less than 0.1, weight percent of the reactant mixture is miscible in the suspending medium. The suspending medium is preferably of a higher density than the reactant mixture and a lower density than the polymerized reactant mixture so as to facilitate suspension and to allow the polymerizable droplets to rise within the suspending medium. Advantageously, the density of the suspending medium is more than 1.02, preferably more than 1.1, times the density of the reactant mixture droplets. Alternatively, where it is desirable for the reactant mixture droplets to descend through the suspending medium, the density of the suspending medium is less than the density of the monomer droplets, with the density of the suspending medium advantageously being less than 0.98, preferably less than 0.9, times the density of the reactant mixture droplets.

Further, the suspending medium should be chemically stable up to a pH value ranging from 9 to 13 at temperatures ranging from 5°C to 90°C. It is also desirable that the suspending medium be thermally stable and exhibit good heat transfer properties up to a temperature of at least 100°C. Examples of suitable suspending mediums include ortho-dichloro-benzene, carbon tetrachloride and chloroform, with ortho-dichloro-benzene being preferred.

A suspending agent is preferably employed in the suspending medium. Suitable suspending agents are those materials which enable the formation of the reactive mixture into spheroidal droplets of a desired size and which hinder the coalescence and aid the dispersion of the thus formed droplets before or during polymerization of the reactive mixture. The selection of a suspending agent is influenced by the identity of components of the reactive mixture and the continuous phase, ratios of these components, the size of spheres desired and the mechanical strength desired. The efficacy of a suspending agent and its optimum concentration can be readily determined empirically by one of ordinary skill in the art. Illustrative suspending agents include finely divided silica such as AEROSIL® R-974, available from Degussa Co., a cationic species like ARAQUAD® 2C-75, available from AKZO Chemie America or similar suspending agents. The suspending agent concentration affects the size of the spheres and the time required to obtain a stable suspension. In the practice of this invention where polymer beads of less than 50 μm in diameter are desired, a preferred suspending agent is ARAQUAD® 2C-75. For polymer beads of diameters greater than 50 μm, AEROSIL® R-974 is preferred as a suspending agent.

The suspending agent is employed in an amount effective to maintain an essentially uniform dispersion of the reactant mixture droplets in the liquid medium following the droplet formation until subsequent polymerization while preventing excessive coalescence or additional dispersion. In general, the amount of suspending agent employed ranges from 0.01 to 2.0 percent by weight based on the total weight of the liquid medium. Preferably, the suspending agent is employed in amounts ranging from 0.1 to 1.0 weight percent.

The reactant mixture used to prepare the spheroidal silica beads is a homogenous mixture of the polymerizable silicate monomer, colloidal silica and the gelation agent discussed hereinbefore. Advantageously, the homogenous mixture, evidenced by a lack of any gel formation, is obtained by careful control of the conditions under which the reactant mixture is formed.

Several conditions of mixing were found to aid in eliminating gel formation in the reactant mixture. Preferred mixing parameters include (a) good agitation during mixing; (b) slow addition of components while mixing solutions; (c) maintaining a temperature below 40°C, preferably below 25°C (i.e., a temperature below the gelation temperature of the reactant mixture); (d) sonication of the reactant mixture during mixing; and (e) filtration of the reactant mixture just prior to forming the suspension. A reactant mixture essentially free of gel formation is indicated by a clear solution.

The resulting reaction mixture is subsequently suspended using conventional suspension polymerization techniques well known in the art, as described in Schildknecht, Polymer Processes , Interscience Publishers, Inc., 1956, pp 69-111. In general, such conventional techniques consist of dispersing by agitation the reactant mixture as droplets within the liquid medium containing a suspending agent. Agitation can be achieved by stirring with an agitator or other conventional means. The suspension of droplets is then subjected to conditions with promote the polymerization of the reaction mixture droplets. During the polymerization, agitation is provided to maintain a dispersion of droplets and provide adequate heat transfer. In the suspension polymerization of the silica containing reactant mixture, it is essential that the liquid medium be provided in an amount sufficient to provide adequate heat transfer and also contain an effective amount of the suspending agent in order to prevent the coalescence of the droplets.

The size of the reactant mixture droplets is controlled by varying the agitation. As the agitation of the medium increases, the reactant mixture droplets achieve a smaller diameter. In one system, varying the agitation speed from 50 rpm to 500 rpm, decreased silica polymer beads diameters from 5 mm to 0.2 mm. Polymer beads as small as 0.01 mm can be made in highly agitated mediums. The polymer spheres produced by this method typically exhibit a bead diameter distribution wherein 80 percent of the spheres lie within a narrow size distribution of the three closest available U.S. sieves.

Preferably, the reactant mixture droplets are formed by a process which results in droplets and thus polymer beads of desired sizes which exhibit a high degree of uniformity in diameter. A preferred process is disclosed in U.S. Patent 4,444,961 (hereinafter Timm). The process of Timm generally comprises passing a reactant mixture through a constricted orifice or orifices to form a jet of material having laminar flow characteristics. The jet is directed into a liquid medium, which optionally contains a suspending agent, in which the mixture of polymerizable reactants is immiscible. The jet is vibratorily excited to form a plurality of droplets of the polymerizable reactant mixture suspended in the liquid medium. The suspended droplets are then subjected to conditions which promote polymerization without substantial coalescence or additional dispersion of the droplets. Such polymerization is carried out by elevating the temperature of the suspension medium to a temperature of at least 50°C, preferably ranging from 60°C to 80°C. Advantageously, the suspending medium comprises from 30 to 60 volume percent of the suspended reactive phase droplets.

The process of Timm can be utilized to form droplets which exhibit a uniform size distribution. By relatively uniform size distribution is meant that the diameter of the droplets formed has a coefficient of variance (i.e., twice the standard deviation divided by the arithmetic mean) of less than 0.1, perferably less than 0.05, most preferably less than 0.01. The polymer beads polymerized from such droplets are screened using conventional dry screening techniques. Using such techniques, the beads are found to exhibit a similar uniformity in that at least 80 percent by number preferably have a particle size between 0.95 and 1.05, inclusive, more preferably between 0.97 and 1.03, inclusive, times the number average particle size of the beads comprising the 80 percent portion. More preferably, at least 90, most preferably at least 95, percent by number of the beads exhibit such a uniform particle size when compared to the number average particle size of the beads comprising the corresponding 90 or 95 percent portion.

Besides the presence of the suspending agent in the liquid medium, several other parameters aid in the formation of a stable suspension of reactant mixture droplets. The temperature and pH of the liquid medium is adjusted such that essentially no polymerization takes place during the formation of the stable suspension. The temperatures between which no polymerization occurs ranges from 0°C to 40°C. Preferably, the temperature is in the range from 10°C to 20°C. It is also advantageous to maintain the liquid medium at a pH value of at least 10. The formation of a stable suspension is important in order to make product beads with spherical shapes and a uniform distribution of particle sizes.

A stable suspension is evidenced by the complete dispersion of the reactant mixture phase in the suspending medium and a lack of substantial coalescence of the reactant mixture droplets. Once such stable suspension is formed, the polymerization of the droplets is initiated by elevating the temperature of the suspension to a temperature of at least 50°C, preferably to a temperature ranging from 60°C to 80°C. The initiation of polymerization can occur in the same vessel in which the reactant mixture droplets are formed or advantageously can be initiated in a separate polymerization vessel. During polymerization which may be carried out continuously or batchwise, agitation is advantageously provided to maintain a dispersion of the droplets and to provide adequate heat transfer. The suspension is maintained at the elevated temperature for a period of time sufficient to complete the polymerization of the dispersed droplets. Polymerization time will vary dependent upon reactant mixture composition, temperature, pore size, and other factors. Generally, polymerization is completed within 0.5 minutes to 2 hours from the time in which the temperature of the suspension is elevated.

Upon completion of the polymerization, the polymer beads may be recovered immediately or allowed to digest in the liquid medium. By the term "digest" is meant that the polymerized polymer beads are allowed to remain in the suspension medium after polymerization is complete. Allowing the polymer beads to digest in the liquid medium has the effect of increasing the porosity of the polymer beads. For example, polymer beads which are removed immediately from the liquid medium generally exhibit a porosity of 30 percent void volume. Polymer beads which are allowed to digest in the liquid medium for 2 hours exhibit a porosity of 90 percent void volume. Thus, by variation of the gelation agent concentration and the digestion time, silica polymer beads can be made with a porosity ranging from 30 to 90 percent void volume.

Upon completion of the polymerization and/or digestion, the resulting polymer beads may be recovered by conventional techniques, such as filtration centrifugation or decantation. Advantageously, upon separation it is desirable to wash the polymer beads with a polar solvent and water to remove the reaction by-products present within the silica spheres. Subsequent to washing, the polymer beads may be dried under conditions which prevent sphere cracking. Advantageously, the removal of the reaction by-products is accomplished by sequentially contacting the separated beads with water, aqueous HCl, water and polar solvents such as acetone. Such removal is necessary because when the polymerization takes place, a phase separation between the silica and aqueous phase occurs. The aqueous phase contains reaction by-products which occupy the pores formed within the solid silica phase in the spheres.

Careful drying of the silica spheres is important in order to prevent cracking of the spheres. When wet silica sheres are dried by rapidly heating them to high temperatures or by blowing hot air through the spheres, sphere cracking is observed. Such cracking is a result of the capillary forces encountered during the sphere drying. These capillary forces increase with decreasing pore diameter, and thus, more cracking of spheres is observed in spheres which have smaller pores. Sphere cracking is also more evident when water is present in the pores as opposed to polar solvents such as acetone, methanol or 2-propanol. Advantageously, acetone or 2-propanol is used as a final rinse prior to drying. Preferably, the drying is carried out slowly for a period of time sufficient to remove the entrapped liquid at a temperature ranging from 100°C to 400°C.

The silica polymer beads prepared by the process of the present invention exhibit spheroidal shape, uniform particle and pore size and controlled porosity. The polymer beads can be prepared with outside diameters in the range of 0.01 mm to 5.0 mm. The spheres may be produced with either a distribution of outside diameters or with a uniform outside diameter. The beads contain pores with diameters ranging from 100 to 5,000 Å - (10-500nm). The porosity of the polymer beads may range from 30 percent void volume to 90 percent void volume. The beads may be further processed and have uses in many areas including catalyst supports, chromatographic column packing material, thermal insulators, drying agents, adsorbents of reactive chemical substrates to immobilize enzymes, biological separations, cigarette filters and other filtration and separation applications.

The following Examples are presented to illustrate the invention.

Example 1

A reactant mixture solution was made by adding 100 g of potassium silicate (KASIL®#1, available from the PQ Corporation) dropwise to 100 g of colloidal silica (LUDOX® AS-40, available from E. I.

duPont de Nemours & Co.) while maintaining the solution under vigorous stirring in a sonicator at 22°C. To this mixture 5.6 g of formamide (practical grade, available from Baker Chemicals) was added dropwise. A visibly clear solution was obtained. The mixture was filtered through a filter unit (Nupro Filter) with 400 micrometer openings. The filtered mixture was designated Solution A.

A Solution B was prepared by dispersing 3.9 g of AEROSIL® R-974 (available from the Degussa, Inc.) into 300 ml of ortho-dichloro-benzene under vigorous stirring at room temperature. Solution A was added to Solution B in a glass flask. Two distinct, separate phases were observed. This mixture was stirred with a rectangular stirring blade of stainless steel. The rotation speed of the blade was controlled electronically at 200 rpm. On stirring, the two phases begun to disperse into each other. As the Solution A phase was dispersed into the Solution B phase reaction mixture, droplets of varying sizes were formed. After 10 minutes of stirring, The droplets were fairly uniform in size and additional stirring did not affect the droplet size. The dispersion of the system was carried out at room temperature.

The stable suspension of reactant mixture droplets in the ortho-dichloro-benzene was immersed in a water bath at 80°C, stirring was adjusted in order to maintain the stable suspension. In 10 minutes, as the temperature of the suspension increased to 60°C, the aqueous phase droplets polymerized producing solid spheres which remained suspended and dispersed in the ortho-dichloro-benzene phase without agglomeration. The polymerization produced a color change in the spheres from translucent to white. Shortly after the color change was observed, the stirring was stopped and the spheres were separated by filtration.

The isolated spheres were immersed in acetone and washed with 1 M aqueous HCl solution then rinsed with additional water and acetone before drying at 120°C for 24 hours. The dried spheres were screened and found to have an average particle diameter of 800 μm, with 80 percent of the beads falling with the range of 20 to 30 mesh sieves (0.84-0.59mm) The spheres were characterized by mercury porosimetry using a Micromeritics Model 9305 instrument and at least 80 percent of the pores had a diameter which was within ±20 percent of the average pore diameter of 262 Å - (26.2nm). The porosity of the spheres was 65 percent void volume.

## Example 2

The preparation of generally uniform sized spheroidal porous silica polymer beads was achieved using a vertically mounted Teflon® column which was 4 meters long and had a diameter of 0.25 inch (0.64 cm) at a jet forming means (a needle in this example) and a diameter of 0.5 inch (1.27 cm) at the point at which the polymerized droplets were transferred to a quenching vessel. At the base of the column was a single 18-gauge Teflon® needle with a nominal O.D. of 0.066 (0.168 cm) and an I.D. of 0.042 in (0.107 cm). Disposed beneath the needle was a reactant phase reservoir connected to a reactive phase source. Disposed 5 cm above the needle was a piping connection communicating the column to a source of suspending medium at room temperature (25°C). Disposed 4 inches (10 cm) above the cold monomer source was a piping connection communicating the column to a source of suspending medium at 110°C. The flow of hot and cold suspending medium was adjusted so the overall temperature of the suspending medium in the column was 80°C.

A piston, disposed within the reactant phase reservoir, was connected by a rod to a variable frequency acoustic exciter commercially available under the trade designation of Model VG-100 by Vibration Test Systems. The walls of the reactant phase reservoir served as the cylinder walls and the piston was employed to transmit the reciprocating motion produced by the exciter to the reactant mixture and laminar reactant jet.

A suspending medium (density (ρ) = 1.29 g/cm³), comprising ortho-dichloro-benzene fills the column and quenching vessel. The suspending medium in the column was at 80°C and the suspending medium in the quenching vessel was maintained at essentially room temperature.

A reactant mixture (Solution A) comprising 500 g of colloidal silica, 500 g of potassium silicate and 77 ml of formamide was prepared according to the process of Example 1. This mixture was metered into the column at a constant rate of 7.7 ml per minute. The mixture was jetted through the opening in the needle to form a jet having laminar flow characteristics defined by a Reynolds number of less than 2,000. To break the reactant phase jet into uniformly sized droplets, the jet was vibratorily excited to a frequency of vibration of a constant 170 cycles per second. The resulting uniformly sized droplets rose through the column due to their lower density than the suspending medium. The average residence time was 180 seconds. The droplets flowed from the upper end of the column into a quenching vessel wherein the polymerization was quenched by contacting the polymerized droplets with the suspending medium at room temperature. Completion of polymerization was evidenced by a color change in the spheres from translucent to white. At the end of this period, the resulting polymer beads were recovered free of the suspending medium using conventional filtration techniques. The wet beads were washed and dried by the process of Example 1. The dried beads were screened using conventional dry screening techniques. The beads were found to have a very narrow particle size distribution, i.e., 90 volume percent of the beads possess a particle diameter from 0.9 to 1.1 times the volume average particle diameter of 1 mm.

The beads were also analyzed for pore size distributions by the mercury penetration employing a Micrometrics Model 9305 mercury porosimeter. The recovered beads were found to have a pore size distribution wherein at least 80 percent of all the pores have a pore diameter which is within ±20 percent of the average pore diameter of 295 Å - (29.5nm).

## Claims

1. A process of preparing porous spheroidal silica polymer beads comprising the steps of

(a) dispersing a reactant mixture comprising a polymerizable silicon oxide and a gelation agent reactant as a plurality of droplets in a liquid medium in which the mixture of polymerizable reactants is immiscible, said dispersion occurring at conditions which do not promote polymerization or substantial coalescence of the droplets of the dispersed reactant mixture; and

(b) subjecting the suspension of reactant mixture droplets to conditions which promote the polymerization of the reactant mixture without substantial coalescence or additional dispersion of the droplets.

2. A process as claimed in Claim 1, wherein the liquid medium comprises an amount of a suspending agent effective to inhibit coalescence of the dispersed reactant mixture droplets and a suspending liquid immiscible with the reactants and the polymers prepared therefrom.

3. A process as claimed in Claim 2, wherein the effective amount of suspending agent ranges from 0.01 to 2.0 percent by weight of the liquid medium.

4. A process as claimed in Claim 1 or Claim 2, wherein step (a) the reactant mixture is passed through a constricted orifice to form a jet of material having laminar flow characteristics and said jet is directed into a liquid medium while vibratorily exciting the jet to form a plurality of droplets of the polymerizable reactant mixture suspended in said liquid medium.

5. A process as claimed in Claim 4, wherein the constricted orifice has a diameter ranging from 0.05 mm to 6 mm.

6. A process as claimed in Claim 5, wherein the flow of the jet is defined by a Reynolds number from 1 to 2,000 and the vibratory excitation is defined by a Strouhal number from 0.5 to 5.

7. A process as claimed in any one of the preceding claims, wherein the droplets from step (b) possess a different density than the liquid medium and the reactant mixture droplets move through the liquid medium substantially in the direction imparted to the droplets due to the difference in density, said liquid medium being stationary or flowing cocurrent with the droplets, and the droplets are conveyed into a polymerization reaction vessel by this movement.

8. A process as claimed in any one of the preceding claims, wherein the polymerizable silicon oxide is a mixture of polymerizable silicate and colloidal silica.

9. A process as claimed in any one of the preceding claims, wherein the gelation agent is selected from formaldehyde, paraformaldehyde, formamide, glyoxal, methyl formate, methyl acetate, ethyl formate, ethyl acetate and mixtures thereof.

10. A process as claimed in any one of the preceding claims, wherein the liquid medium of step (a) is maintained at a temperature ranging between 5°C to 40°C and a pH value greater than 10.

11. A process as claimed in any one of the preceding claims, wherein the suspension of reactant mixture droplets in step (b) are subjected to polymerization conditions at a temperature greater than 50°C.

12. A process as claimed in any one of the preceding claims, further comprising digesting the polymerized reactant product in the liquid medium for a period of time sufficient to increase the porosity of the polymer product.

13. A product made by a process as claimed in any one of the preceding claims, wherein the polymerized reactant mixture has an average particle diameter in the range form 0.01 mm to 5 mm.

14. A product made by a process as claimed in any one of the preceding claims, wherein the polymerized reactant mixture has average pore sizes in the range from 10 to 500 nm (100 to 5,000 Å).

15. A product as claimed in Claim 13 or Claim 14, wherein the polymerized reactant mixture exhibits a porosity ranging from 30 to 90 percent void volume.